# EUROPÄISCHE PATENTANMELDUNG

(11) **EP 1 161 026 A2**
(43) Veröffentlichungstag der Anmeldung: **05.12.2001**
(21) Anmeldenummer: 01111772.8
(22) Anmeldetag: 15.05.2001
(51) Int. Cl.: H04L 5/14

(54) **Kommunikationsverfahren für zwei mittels einer Punkt-zu-Punkt-Verbindung miteinander verbundenen Kommunikationspartner**

(30) Priorität: 31.05.2000 DE 10026812; 24.07.2000 DE 10035986
(71) Anmelder: SIEMENS AKTIENGESELLSCHAFT, 80333 München (DE)
(72) Erfinder: Renner, Klaus-Dieter, 90482 Nürnberg (DE); Rother, Ulrich, 91096 Möhrendorf (DE)

(57) **Zusammenfassung**

Die Erfindung bezieht sich auf ein Kommunikationsverfahren für zwei Kommunikationspartner (2;4,6,8), die mittels einer Voll-Duplex Punkt-zu-Punkt-Verbindung (10) miteinander verknüpft sind. Erfindungsgemäß ist dieses Verfahren unterteilt in eine Identifizierungs-, eine Konfigurierungs- und eine Datenübertragungs-Phase, wobei während der Identifizierungsphase die Kommunikationspartner (2;4,6,8) sich gegenseitig identifizieren und ihre Kommunikationsparameter definieren, wobei während der Konfigurierungsphase kommunikationspartnerabhängige Konfigurierungsdaten zwischen den beiden Kommunikationspartnern (2;4,6,8) ausgetauscht werden, und wobei während der Datenaustauschphase zyklische und azyklische Daten zwischen den beiden Kommunikationspartner (2;4,6,8) ausgetauscht werden, wenn die Konfigurierungsphase erfolgreich abgeschlossen ist. Somit erhält man eine schnelle periodische Kommunikation zwischen zwei Partner (2;4,6,8), wobei keine Dual-Port-RAM mehr benötigt werden, so dass dieses Verfahren besonders kostengünstig ist.

## Beschreibung

Die Erfindung bezieht sich auf ein Kommunikationsverfahren für zwei Kommunikationspartner, die mittels einer Voll-Duplex Punkt-zu-Punkt-Verbindung miteinander verknüpft sind.

Im Handel sind Umrichtergeräte erhältlich, bei denen Optionsmodule mittels einer parallelen Schnittstelle über ein Dual-Port-RAM mit dem Umrichtergerät verknüpft sind. Diese Optionsmodule sind Kommunikationsbaugruppen, auch als Automatisierungsmodule bezeichnet, und Technologiebaugruppen. Diese Module werden in einer Elektronikbox des Umrichtergerätes gestreckt. Der Datenaustausch erfolgt über das Dual-Port-RAM. Bei diesen Daten handelt es sich um Konfigurierungsdaten, zyklische Daten (Prozessdaten) und azyklische Daten (Parameter).

Anstelle diese Optionsbaugruppen in eine Elektronikbox unterzubringen, besteht auch die Möglichkeit, diese Optionsmodule auf die an der Frontseite des Umrichtergerätes vorhandenen SUB-D-Buchse zu stecken. Auch hierbei findet der Datenaustausch mittels einer parallelen Schnittstellen über ein Dual-Port-RAM statt.

Für den Datenaustausch wird immer ein verhältnismäßig teures Dual-Port-RAM verwendet. Bei einem Umrichtergerät mit Low-Performance-Anforderungen macht sich der Preis des Dual-Port-RAM bemerkbar. Durch die parallele Schnittstelle werden viele Leitungen benötigt, wodurch die Größe einer SUB-D-Buchse vorbestimmt ist. Außerdem ist diese Verbindung störempfindlich. Aufgrund dieser Störempfindlichkeit dürfen die Leitungen nur eine geringe Leitungslänge aufweisen.

Für die Kommunikation stehen ebenfalls mehrere Protokolle wie USS, PROFIBUS oder SIMATIC S7 zur Verfügung. Die beiden erstgenannten Protokolle sind Master-Slave-Protokolle, die keinen Mechanismus für eine asymmetrische Kommunikation in beiden Richtungen aufweisen. Das heißt, nur der Master kann eine Anfrage starten, wobei der Slave nur in der Lage ist, darauf zu antworten. Außerdem weisen diese Standardprotokolle viele Funktionalitäten auf, die bei einer Kommunikation zwischen einem Umrichter und einem Optionsmodul nicht notwendig sind. Diese Überfrachtung der Standardprotokolle führt jedoch dazu, dass die Geschwindigkeit und die Bandbreite der Datenübertragung herabgesetzt wird. Das Protokoll SIMATIC S7 weist gegenüber den beiden erstgenannten keinen Mechanismus für eine symmetrische Datenübertragung auf.

Der Erfindung liegt nun die Aufgabe zugrunde, ein Kommunikationsverfahren für zwei Kommunikationspartner anzugeben, dass die zuvor genannten Nachteile nicht mehr aufweist.

Diese Aufgabe wird erfindungsgemäß mit den Merkmalen des Anspruchs 1 gelöst.

Mit dem erfindungsgemäßen Kommunikationsverfahren identifizieren sich beim Anlauf die Kommunikationspartner gegenseitig und tauschen ihre Fähigkeiten und Kommunikationseigenschaften aus. Daraus wird dann automatisch die bestmöglichste Konfiguration, die die vorhandene Bandbreite optimal ausnutzt, ausgewählt. Dadurch ist der Kommunikationsmechanismus skalierbar, wodurch Optionsmodule zwischen Umrichter unterschiedlicher Performance ausgetauscht werden können. Außerdem ist die Kommunikation unabhängig von der Ausgestaltung der Optionsmodule.

Zu den angesprochenen Kommunikationseigenschaften, die beim Anlauf ausgetauscht werden, gehören:
- Art der Kommunikation (Synchron/Asynchron)
- größte unterstützte Baudrate
- Zykluszeit
- Anzahl der Konfigurationsdaten
- Anzahl der zyklischen Daten
- Anzahl der zyklischen Daten.

Mit Hilfe dieser ausgetauschten Kommunikationsdaten kann die bestmöglichste Konfiguration automatisch gewählt werden.

Bei einem vorteilhaften Verfahren ist der Identifizierungsphase eine Initialisierungsphase vorgeschaltet, mit der der zweite Kommunikationspartner vom ersten Kommunikationspartner erkannt wird. Zur Identifizierung des zweiten Kommunikationspartner wird ein Spannungspotential auf einer Verbindungsleitung ausgewertet. Die Auswertung erfolgt am einfachsten mit einer Tabelle, in der die Spannungswerte aller Optionsmodule, die mit einem Umrichter verbunden werden können, hinterlegt sind. Eine derartige Initialisierungsphase ist dann vorgesehen, wenn der erste Kommunikationspartner mit allen möglichen Optionsmodulen ohne einen Bediener kommunizieren soll.

Weitere vorteilhafte Ausführungsformen des Kommunikationsverfahren sind in den Unteransprüchen 3 bis 10 zu entnehmen. Zur weiteren Erläuterung der Erfindung wird auf die Zeichnung bezug genommen, in der das erfindungsgemäße Kommunikationsverfahren schematisch veranschaulicht ist.
- FIG 1: zeigt ein Übersichtsdiagramm, das die möglichen Verbindungen zwischen einem Umrichter und verschiedener Optionsmodule zeigt,
- FIG 2: zeigt eine parallele Topologie mit einem angebundenen Automatisierungsmodul und einem Technologiemodul, in der
- FIG 3: ist eine serielle Topologie eines Automatisierungsmoduls und eines Technologiemoduls dargestellt, in der
- FIG 4: ist eine Übersicht über die Phasen des erfindungsgemäßen Verfahrens veranschaulicht, die
- FIG 5: zeigt in einer Tabelle die Übertragungsfolge der Telegramme der Identifizierungsphase des erfindungsgemäßen Verfahrens, wogegen in den
- FIG 6 und 7: jeweils die Arbeitsweise des Masters und des Slaves während der Identifizierungsphase schematisch dargestellt sind, die
- FIG 8: zeigt in einer Tabelle die Übertragungsfolge der Telegramme der Konfigurierungsphase des erfindungsgemäßen Verfahrens, wogegen in den
- FIG 9 und 10: jeweils die Arbeitsweise des Masters und des Slaves während der Konfigurierungsphase schematisch veranschaulicht sind, die
- FIG 11: zeigt in einer Tabelle die Übertragungsfolge der Telegramme einer Datenaustauschphase des erfindungsgemäßen Verfahrens mit alternierenden zyklischen/azyklischen Daten, die
- FIG 12: zeigt die Arbeitsweise des Masters und des Slaves während der Datenaustauschphase,
- FIG 13: zeigt in einer Tabelle die Übertragungsfolge der Telegramme für den azyklischen Datenaustausch ohne eine Domänenbehandlung, wogegen in den
- FIG 14 und 15: jeweils die azyklische Arbeitsweise ohne Domäne des Client und des Servers veranschaulicht ist, in der
- FIG 16: ist in einer Tabelle die Übertragungsfolge der Telegramme für den azyklischen Datenaustausch mit einer Domänenbehandlung dargestellt, wogegen in der
- FIG 17: die azyklische Arbeitsweise des Client mit Domänentransfer und in der
- FIG 18: die azyklische Arbeitsweise des Servers mit Domänentransfer dargestellt sind.

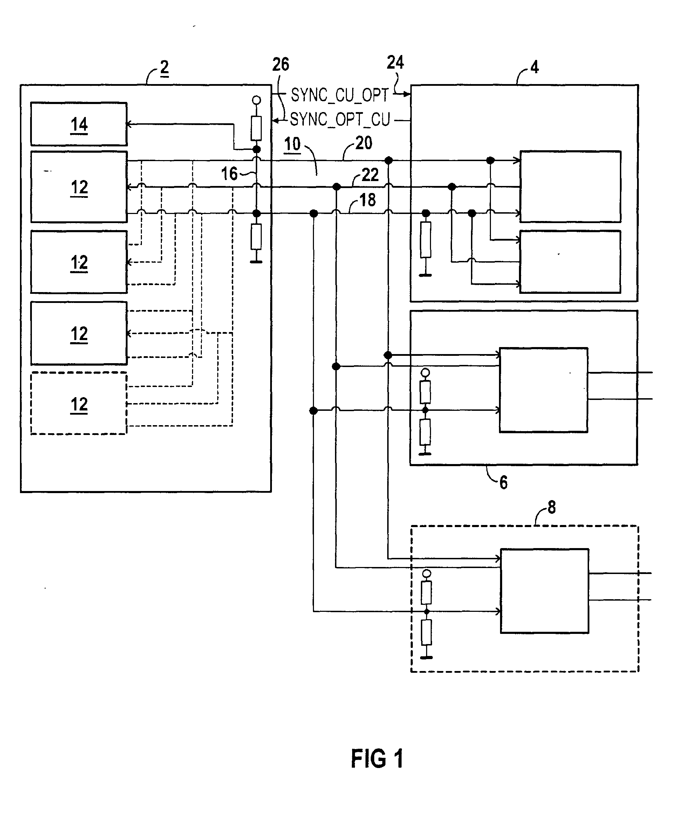

Im Übersichtsdiagramm gemäß FIG 1 ist mit 2 ein erster Kommunikationspartner und mit 4,6,8 jeweils ein zweiter Kommunikationspartner bezeichnet. Von diesen zweiten Kommunikationspartnern 4,6,8 ist nur einer mittels einer Voll-Duplex Punkt-zu-Punkt-Verbindung 10 mit dem ersten Kommunikationspartner 2 verknüpft. Als er-ster Kommunikationspartner 2 ist beispielsweise in der Antriebstechnik ein Stromrichtergerät eines Antriebssystems, von dem hier nur die Steuereinrichtung, insbesondere der Prozessor gezeigt ist, dargestellt ist. Normalerweise weist der Prozessor des Kommunikationspartner nur eine Schnittstelle 12 auf. Es besteht jedoch auch die Möglichkeit, wie hier dargestellt, dass mehrere Schnittstellen 12 vorhanden sind, die freigeschaltet werden können. Diese Freischaltung wird von einer Initialisierungsphase bewerkstelligt. Dazu ist ein A/D-Wandler 14 mit einem Spannungsteiler 16 vorgesehen.

Als zweite Kommunikationspartner 4,6 und 8 sind hier ein Technologiemodul 4, ein Schnittstellenmodul 6, das auch als Automatisierungsmodul bezeichnet wird, und ein Drehzahlerfassungsmodul 8 veranschaulicht. Bei den hier genannten Modulen 4,6 und 8 handelt es sich nicht um eine abschließende Aufzählung, sondern es soll nur gezeigt werden, welche Variationen der Module möglich sind, die mit dem ersten Kommunikationspartner (Antriebssystem) mittels der Voll-Duplex Punkt-zu-Punkt-Verbindung 10 kommunizieren können.

Für die Kommunikation benötigt die Voll-Duplex Punkt-zu-Punkt-Verbindung 10 drei Leitungen. Eine Leitung 16 zur Übertragung eines Taktsignals CLK, eine Leitung 18 zur Übertragung von Daten Tx und eine Leitung 20 zum Empfangen von Daten Rx. Auf der Leitung 16 wird ein Taktsignal CLK übermittelt, wenn eine synchrone Verbindung und/oder beim Anlauf eine Modulidentifikation stattfindet. Dieses Signal CLK wird nicht bei einer Asynchronverbindung benötigt. Auf dieser Leitung 16 wird ein Signal TXE übertragen, sobald ein Sender-Empfänger-Modul als zweiten Kommunikationspartner verwendet wird. Zusätzlich können auch noch zwei weitere Leitungen 22 und 24 vorgesehen sein, die jedoch nicht für die Kommunikation benötigt werden. Mittels dieser beiden Leitungen 22 und 24 werden Synchronisierungssignale SYNC_CU_OPT und SYNC_OPT_CU übermittelt. Mittels des Synchronisierungssignals SYNC_CU_OPT wird ein Technologiemodul 4 auf den Prozessor eines Stromrichtergerätes und mittels des Synchronisiersignals SYNC_OPT_CU wird der Prozessor eines Stromrichtergeräts auf ein Technologiemodul 4 synchronisiert.

Den einzelnen Modulen 4,6 und 8 ist zu entnehmen, dass die Leitung 16, mit der ein Taktsignal CLK übermittelt wird, auf unterschiedliche Spannungen geklemmt ist. Das Technologiemodul 4 erzeugt ein Spannungslevel auf der Leitung 16 von 1 V, wogegen das Drehzahlerfassungsmodul 8 auf der Leitung 16 einen Spannungslevel von 3,5 V generiert. Das Automatisierungsmodul 6 erzeugt in Abhängigkeit seiner Schnittstellencharakteristik unterschiedliche Spannungslevel. Ist das Automatisierungsmodul 6 als RS232-Schnittstelle ausgebildet, so weist der Spannungslevel auf der Leitung 16 ein Wert von 1,5 V an. Ist das Automatisierungsmodul 6 dagegen als RS485-Schnittstelle oder als PROFIBUS-Schnittstelle ausgebildet, so weist der Spannungslevel auf der Leitung 16 einen Wert von 2 V oder 3 V auf. In Abhängigkeit dieser unterschiedlichen Spannungslevel kann beim Anlauf der Kommunikation vom ersten Kommunikationspartner 2 der zweite Kommunikationspartner 4,6,8 identifiziert werden. Diese Identifizierung des zweiten Kommunikationspartner 4,6,8 findet nur dann statt, wenn der erste Kommunikationspartner für alle möglichen zweiten Kommunikationspartner 4,6,8 ausgestattet ist.

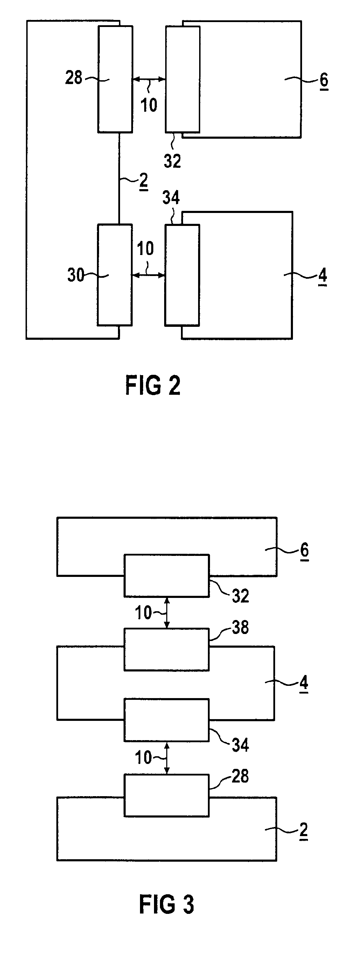

In den FIG 2 und 3 sind zwei Topologien von einem Automatisierungsmodul und einem Technologiemodul veranschaulicht. Bei den dargestellten Topologien handelt es sich um eine parallel (FIG 2) und eine serielle (FIG 3) Topologie. Bei der parallelen Topologie sind beide Module 4 und 6 parallel mit einem ersten Kommunikationspartner 2, beispielsweise ein Stromrichtergerät, verschaltet. Dazu muss der erste Kommunikationspartner 2 zwei Schnittstellen 28 und 30 aufweisen. Die Schnittstellen 28 und 30 sind jeweils mittels einer Voll-Duplex Punkt-zu-Punkt-Verbindung 10 mit einer Schnittstelle 32 bzw. 34 des Automatisierungsmoduls 6 bzw. des Technologiemoduls 4 verknüpft. Bei der seriellen Topologie ist das Technologiemodul 4 mit dem ersten Kommunikationspartner 2 und das Automatisierungsmodul 6 mit dem Technologiemodul 4 verbunden. Für diese serielle Topologie benötigt das Technologiemodul zwei Schnittstellen 34 und 38. Die Schnittstellen 34 bzw. 38 ist mittels einer Voll-Duplex Punkt-zu-Punkt-Verbindung 10 mit einer Schnittstelle 28 bzw. 32 des ersten Kommunikationspartners 2 bzw. des Automatisierungsmoduls 6 verbunden. Die beiden Topologien unterscheiden sich nicht nur in der Hardware, sondern auch in der Prozessdaten-Übermittlung. Bei der parallelen Topologie werden die Prozessdaten vom Automatisierungsmodul 6 zum ersten Kommunikationspartner 2 und dann von diesem zum Technologiemodul 4 übermittelt. Bei der seriellen Topologie werden die Prozessdaten direkt vom Automatisierungsmodul 6 zum Technologiemodul übertragen und von dort zum ersten Kommunikationspartner 2. Dadurch weist die parallel Topologie eine längere Totzeit bei der Prozessdatenübermittlung auf, als die serielle Topologie. Bei den genannten Schnittstellen 28,30,32,34 und 38 handelt es sich um serielle Schnittstellen. Bei einem Stromrichtergerät - erster Kommunikationspartner 2 - eines Antriebssystems weist der Prozessor nur eine serielle Schnittstelle auf. Somit bietet sich die serielle Topologie für ein Stromrichtergerät eines Antriebssystems an.

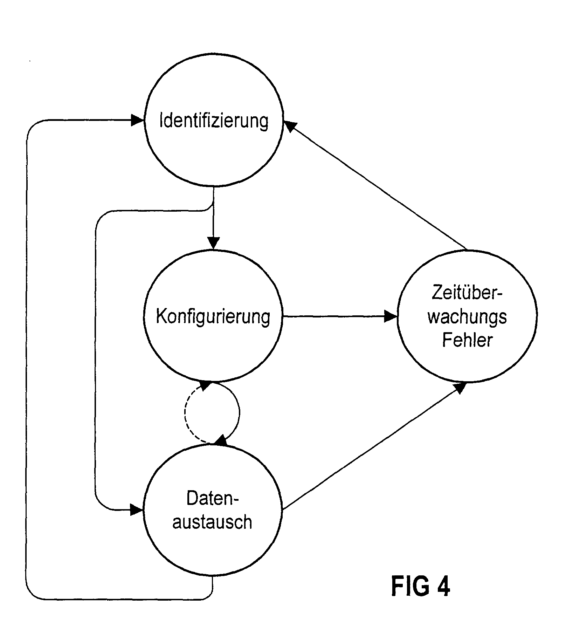

Die FIG 4 veranschaulicht die Phasen des erfindungsgemäßen Verfahrens für zwei Kommunikationspartners 2 und 4 bzw. 6 bzw. 8, die mittels einer Voll-Duplex Punkt-zu-Punkt-Verbindung 10 miteinander verknüpft sind. Das erfindungsgemäße Verfahren weist drei Phasen auf, nämlich die Identifizierungsphase, die Konfigurierungsphase und die Datenaustauschphase. Bei einer vorteilhaften Ausführungsform ist der Identifizierungsphase eine Initialisierungsphase vorgeschaltet. Falls die Konfigurierungsphase nicht benötigt wird, wird die Identifizierungsphase direkt mit der Datenübertragungsphase verkoppelt. Wenn die Kommunikationsverbindung während der Kommunikation fehlerhaft ist, wird diese Verbindung wieder hergestellt, indem die Identifizierungsphase neu gestartet wird.

Während der Identifizierungsphase identifizieren sich die beiden Kommunikationspartner 2 und 4 bzw. 6 bzw. 8 gegenseitig und definieren ihre Kommunikationsparameter. Wenn eine Konfigurierungsphase vorhanden ist, so schließt sich diese der Identifizierungsphase an. Während dieser Konfigurierungsphase werden modulabhängige Konfigurierungseigenschaften zwischen den Kommunikationspartnern ausgetauscht. Zu diesen ausgetauschten Kommunikationseigenschaften gehören:
- Art der Kommunikation (Synchron/Asynchron)
- größte unterstützte Baudrate
- Zykluszeit
- Anzahl der Konfigurationsdaten
- Anzahl der zyklischen Daten
- Anzahl der zyklischen Daten.

Aus diesen Kommunikationsparametern und Kommunikationseigenschaften wird automatisch die bestmögliche Konfiguration, die die vorhandene Bandbreite optimal ausnutzt, ausgewählt. Nachdem die bestmöglichste Konfiguration ausgewählt ist, kann der Datenaustausch beginnen.

Die Datenaustauschphase weist bis zu drei Kanäle auf, einen zyklischen und zwei azyklische Kanäle. Der zyklische Kanal oder die azyklischen Kanäle müssen nicht gleichzeitig anwesend sein. Für eine Datenübertragung muss wenigstens ein Kanal vorhanden sein. Diese Kanäle werden pro Taktperiode des ersten Kommunikationspartners seriell übertragen. Jeweils zwischen zwei Kanälen ist für eine vorbestimmte Zeit eine Pause, in der das Taktsignal CLK nicht aktiv ist. Diese vorbestimmte Zeit ist so bemessen, dass zwei Wörter übertragen werden könnten. Diese Zeit ist für den zweiten Kommunikationspartner 4 bzw. 6 bzw. 8 notwendig, um das empfangene Telegramm, bestehend aus einem Rahmen und Daten, zu verarbeiten und seinen Empfangsteil für das nächste Telegramm auf den Anfang zurückzusetzen. Mit den zyklischen Kanal werden Prozessdaten und mit den azyklischen Kanal Parameter übermittelt. Zu diesen Parametern gehören auch Fehler- und Diagnoseparameter. Die Anzahl der zyklischen und azyklischen Daten bestimmt die Zeit, die gebraucht wird, um ein Kanal zu übertragen. In der Identifizierungs- und Konfigurierungsphase ist jeweils nur ein Kanal vorhanden, die als Identifizierungs- bzw. Konfigurierungskanal bezeichnet sind.

Bei dieser erfindungsgemäßen Definition des Kommunikationsmechanismus ist eine Skalierbarkeit erreicht, dass die Module zwischen Kommunikationspartnern 2 unterschiedlicher Leistungsniveaus austauschbar sind. Das heißt, in der Antriebstechnik können ein und dasselbe Modul mit einem Basisstromrichtergerät, einem Vektorstromrichtergerät oder einem High-Performance-Stromrichtergerät verknüpft werden, ohne dass sich die Kommunikationsmechanismen ändern müssen. Dadurch wird die Vielfalt eines Moduls auf eine Ausführung reduziert, wodurch sich die Kosten wesentlich reduzieren bzw. wodurch auch Module in den Basisstromrichtergeräten eingesetzt werden können.

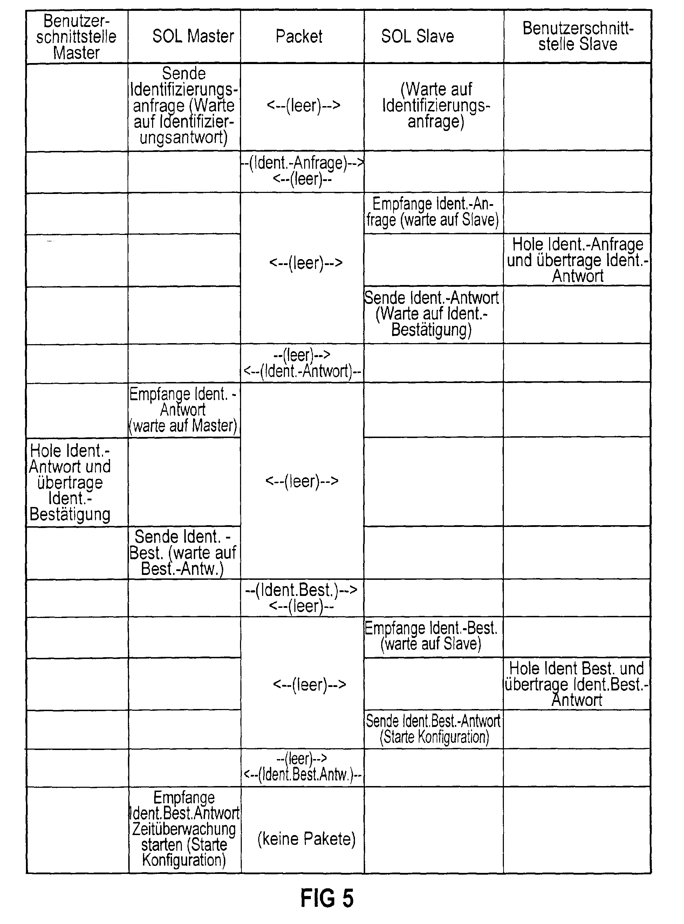

Die FIG 5 zeigt in einer Tabelle die Übertragungsfolge der Telegramme in der Identifizierungsphase des erfindungsgemäßen Kommunikationsverfahrens. Wie bereits erwähnt, identifizieren sich die beiden Kommunikationspartner 2 und 4 bzw. 6 bzw. 8 während der Identifizierungsphase gegenseitig. Diese Identifizierungsphase ist wiederholbar, d.h., diese kann ohne Aus- und wieder Einschalten der Leistungsversorgung des ersten Kommunikationspartner 2 neu gestartet werden. In dieser Identifizierungsphase werden vier Telegramme übertragen, die wie folgt bezeichnet werden:
- ident.req.: Identifizeirungs-Anforderung
- ident.rep.: Identifizierungs-Rückmeldung
- ident.ack.: Identifizierungs-Bestätigung
- ident.arep.: Identifizierungs-Bestätigungs-Rückmeldung.

Während der Identifizierungsphase ist die Baudrate auf 5k Baud gesetzt und es werden vier Telegramme benötigt für einen sicheren Quittungsbetrieb. Die Identifizierungs-Anforderung ident.req. enthält die Parameter des zweiten Kommunikationspartners 4 bzw. 6 bzw. 8. Der erste Kommunikationspartner 2 prüft die Werte und schickt die aushandelbaren Werte in der Identifizierungs-Bestätigung ident.ack. zurück. Wenn die Identifizierungs-Bestätigungs-Rückmeldung ident.arep. des zweiten Kommunikationspartners 4 bzw. 6 bzw. 8 negativ ist, ist eine Kommunikation nicht möglich. Falls dieses jedoch gültig ist, so werden die ausgehandelten Kommunikationspartner gesetzt. Am Ende der Identifizierungsphase wird zur Konfigurierungsphase oder zur Datenaustauschphase gewechselt, in Abhängigkeit des Ausgehandelten.

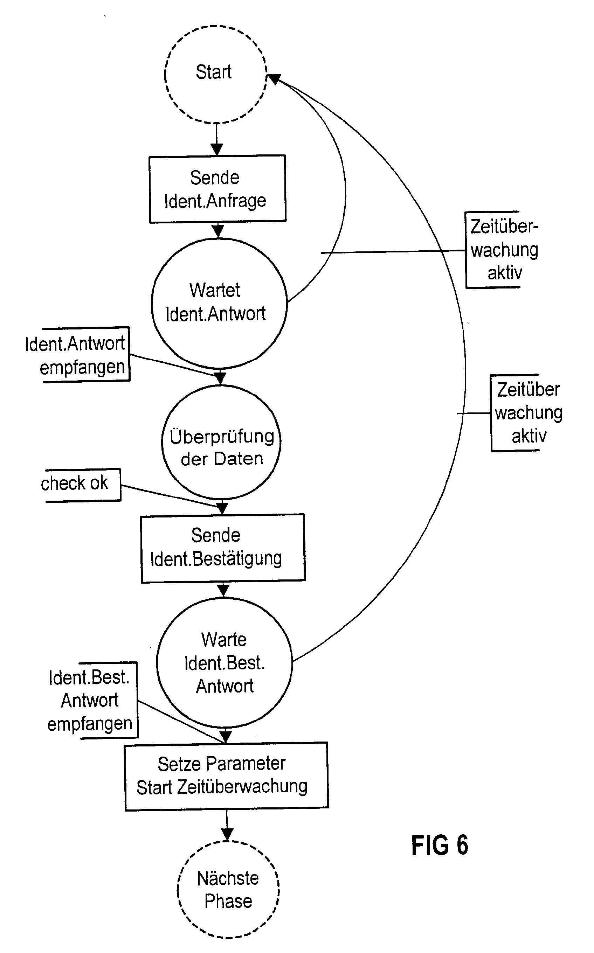

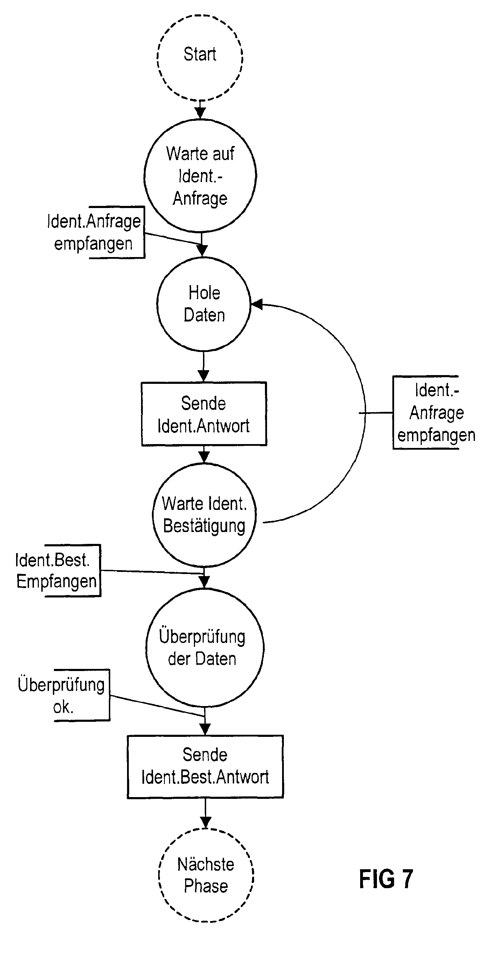

In den FIG 6 und 7 ist dieselbe Identifizierungsphase des erfindungsgemäßen Kommunikationsverfahrens nach FIG 5 jeweils in einem Zustandsdiagramm dargestellt. Dabei sind die beiden Zustandsdiagramme aus der Sicht des ersten und des zweiten Kommunikationspartners 2 und 4 bzw. 6 bzw. 8 dargestellt. Die FIG 6 zeigt die Identifizierungsphase aus der Sicht des ersten Kommunikationspartners 2, der ebenfalls als Master bezeichnet wird. In der FIG 7 ist die Identifizierungsphase aus der Sicht des zweiten Kommunikationspartners 4 bzw. 6 bzw. 8, der auch als Slave bezeichnet wird, dargestellt.

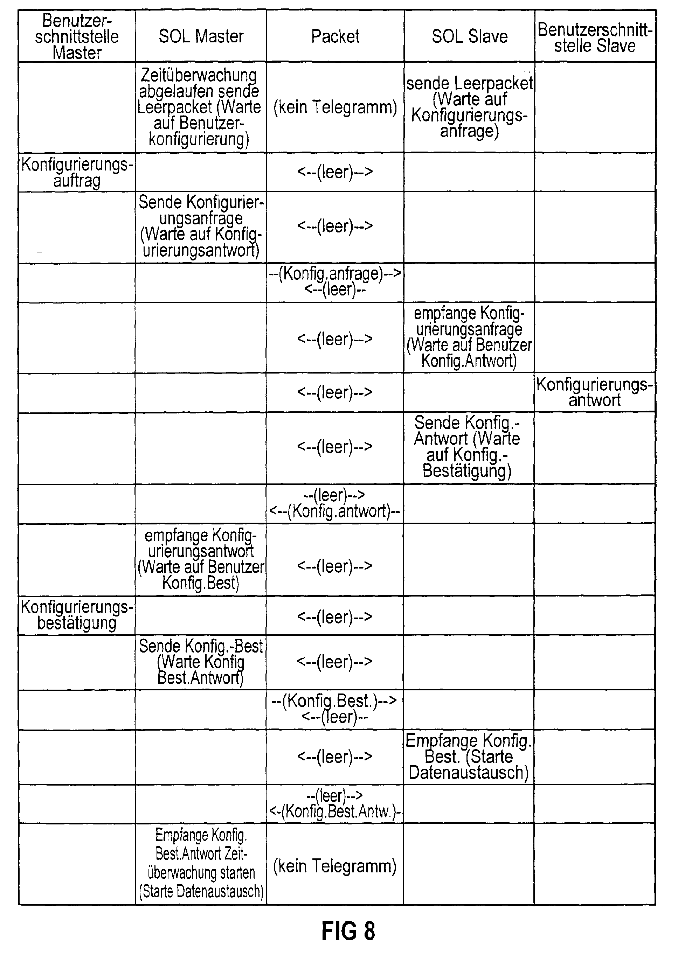

Die FIG 8 zeigt eine Tabelle der Übertragungsfolge der Telegramme der Konfigurierungsphase des erfindungsgemäßen Kommunikationsverfahrens. Während dieser Konfigurierungsphase werden Konfigurierungsdaten zwischen den beiden Kommunikationspartnern 2 und 4 bzw. 6 bzw. 8 ausgetauscht. Auch in der Konfigurierungsphase werden vier Telegramme übermittelt. Bei diesen vier Telegrammen handelt es sich um Anforderungs-Telegramm config.req., ein Rückmeldungs-Telegramm config.rep., ein Bestätigungs-Telegramm config.ack. und um ein Bestätigungs-Rückmeldungs-Telegramm config.arep.. Das Anforderungs- und das Rückmeldungs-Telegramm config.req. und config.rep. beinhalten Daten. Mit diesen vier Telegrammen wird ebenfalls ein sicherer Quittungsbetrieb abgewickelt.

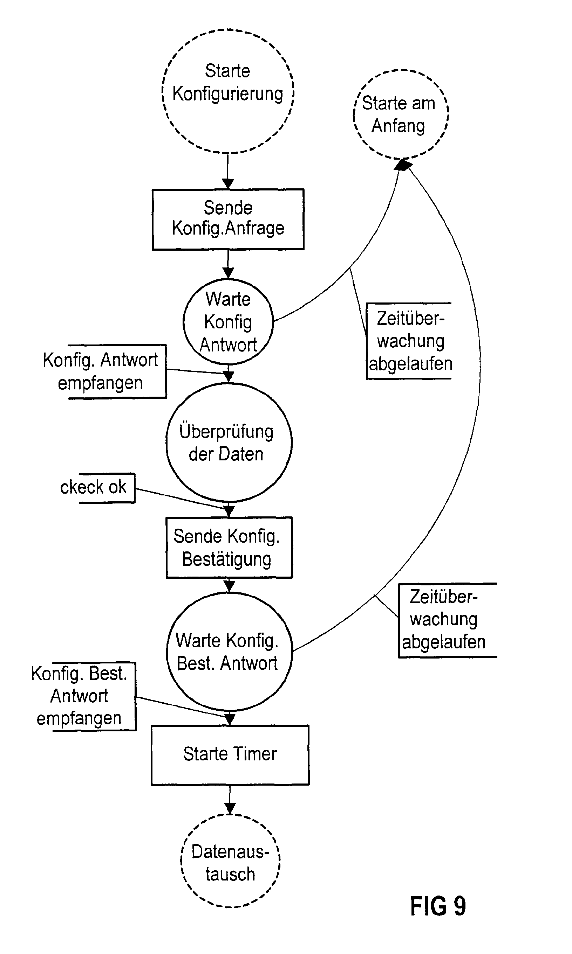

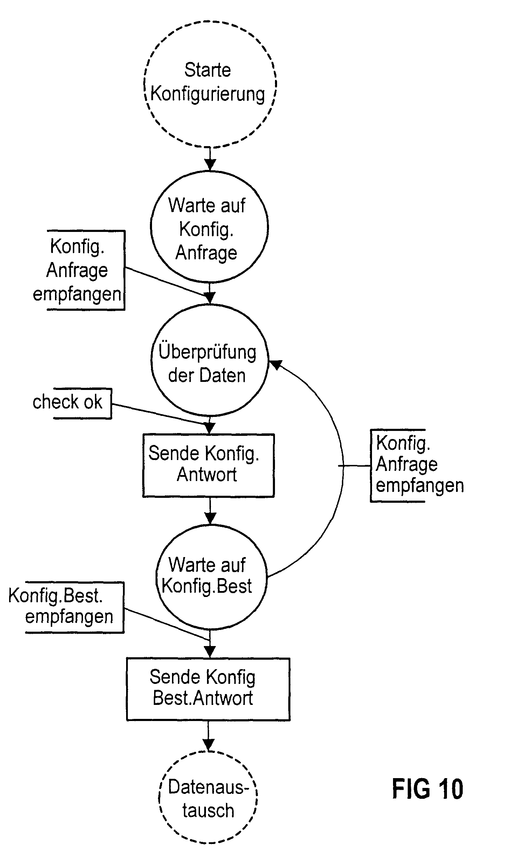

Die beiden zugehörigen Zustandsdiagramme der Konfigurierungsphase sind in den FIG 9 und 10 dargestellt. Die FIG 9 zeigt ein Zustandsdiagramm aus der Sicht des Masters (erster Kommunikationspartner 2) und in der FIG 10 ist das Zustandsdiagramm aus der Sicht des Slaves (zweiter Kommunikationspartner 2 bzw. 6 bzw. 8) dargestellt.

Zu Beginn der Konfigurierungsphase sendet der Master 2 gemäß FIG 9 ein Anforderungs-Telegramm config.req. mit Konfigurierungsdaten an den Slave 4 bzw. 6 bzw. 8 und wartet auf ein Rückmeldungstelegramm config.rep. vom Slave 4 bzw. 6 bzw. 8. Die Konfigurierungsdaten des Anforderungs-Telegramms config.req. wird vom Slave 4 bzw. 6 bzw. 8 geprüft und antwortet umgehend mit einem positiven oder negativen Rückmeldungstelegramm config.rep.. Zu den Konfigurierungsdaten gehört u.a. eine Busadresse, eine Baudrate. Wenn die Rückmeldung negativ ist, signalisiert der Master 2 ein Fehler und fordert den Bediener auf, die Konfigurierungsdaten zu ändern. Nachdem dies geschehen ist, wird vom Master 2 ein neues Anforderungs-Telegramm gesendet. Mit dem Bestätigungs-Telegramm config.ack. wird der Master 2 eine positive Antwort auf die zurückgeschickten Konfigurierungsdaten, die mittels des Rückmeldungs-Telegramms vom Slave 4 bzw. 6 bzw. 8 zum Master 2 übermittelt worden sind. Das letzte Telegramm sichert den doppelten Quittungsbetrieb. Ein Zeitüberlauf während dieser Phase führt zu einem Neustart der Identifizierungsphase.

Zu Beginn der Konfigurierungsphase erwartet der Slave 4 bzw. 6 bzw. 8 gemäß FIG 10 eine Konfigurierungs-Anforderung config.req.. Nachdem der Slave 4 bzw. 6 bzw. 8 diese Anforderung config.req. erhalten hat, werden die Daten analysiert. In Abhängigkeit dieser Analyse wird eine positive oder eine negative Konfigurierungs-Rückmeldung config.rep. gesendet. Ist die Rückmeldung negativ, so wird eine neue Konfigurierung mittels der Konfigurierungs-Anforderung config.req. erwartet. Wenn das Ergebnis der Analyse positiv ist, werden mit der Konfigurierungs-Rückmeldung die Daten zum Master 2 zurückgesendet. Danach wartet das Slave 4 bzw. 6 bzw. 8 auf eine Konfigurierungs-Bestätigung config.ack. vom Master 2. Wenn die Daten ungültig sind, ist die Konfigurierungs-Bestätigung negativ. Die Bestätigungs-Rückmeldung config.arep. vom Slave 4 bzw. 6 bzw. 8 ist abhängig von den Daten und vom Typ des Slave 4 bzw. 6 bzw. 8. Wenn in den Daten der Konfigurierungs-Bestätigungs-Rückmeldung config.arep. ein kritischer Fehler festgestellt wird, kann die Konfigurierungsphase neu gestartet werden. Kann kein kritischer Fehler im Datensatz festgestellt werden, wird zur Phase des Datenaustausches gewechselt.

In der Datenaustauschphase werden zyklische und azyklische Daten zwischen den beiden Kommunikationspartnern 2 und 4 bzw. 6 bzw. 8 ausgetauscht. Zwischen diesen beiden Datentypen wird streng unterschieden, damit die azyklischen Daten sich nicht auf die zyklischen Daten auswirken können, die in der schnellen Zeitscheibe bearbeitet werden. Die azyklischen Daten werden unabhängig von zyklischen Daten bearbeitet. Sobald ein Fehler vorliegt, wird die azyklische Datenkommunikation unterbrochen und die Fehlermeldung wird mit dem azyklischen Datenkanal übermittelt.

Es gibt zwei Gründe, die Datenaustauschphase zu verlassen:
- neue Identifikation oder Konfiguration, die mittels des zyklischen oder azyklischen Kanals ersucht werden können.
- Verbindungsverlust. Wenn in einer vorbestimmten Zeit kein gültiges Telegramm vorliegt, so wird dies als Verbindungsverlust gewertet. Dies führt zu einem Neustart des Kommunikationsverfahrens, das mit der Identifikationsphase beginnt.

Für die Kommunikation zwischen zwei Kommunikationspartner 2 und 4 bzw. 6 bzw. 8, die mittels einer Voll-Duplex Punkt-zu-Punkt-Verbindung 10 miteinander verknüpft sind, gibt es zwei Datenaustausch-Kanäle, nämlich einen zyklischen Kanal und einen azyklischen Kanal für die Rückmeldung des zweiten Kommunikationspartners 4 bzw. 6 bzw. 8.

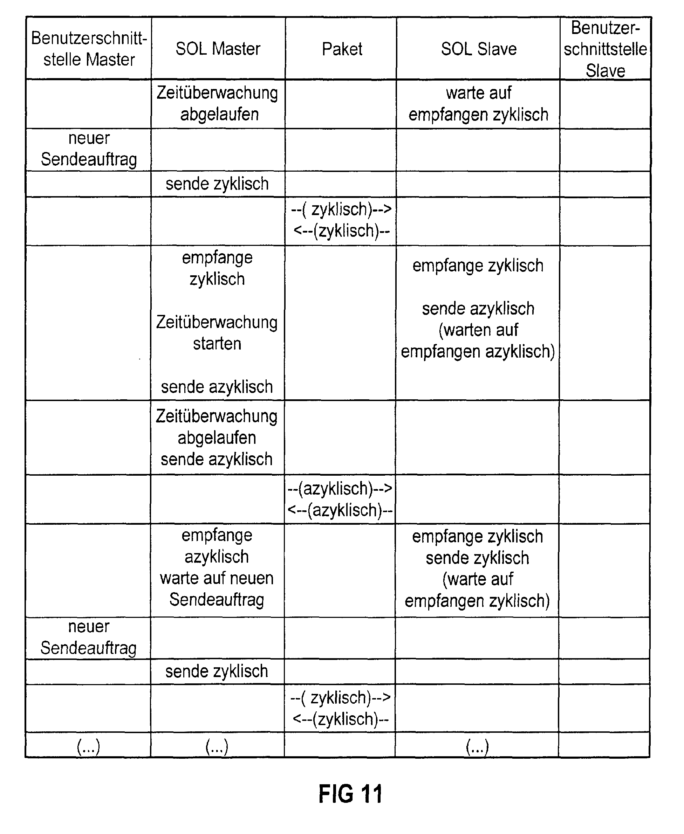

Die FIG 11 zeigt eine Tabelle der Übertragungsfolge der Telegramme des Datenaustausch mit alternierenden zyklischen und azyklischen Daten. Der erste Kommunikationspartner 2 wird hier auch wieder als Master bezeichnet, wogegen der zweite Kommunikationspartner 4 bzw. 6 bzw. 8 als Slave bezeichnet wird. Der Masterbenutzer triggert die Bearbeitung des Datenaustausches. Alle anderen Benutzeranrufe sind asynchron.

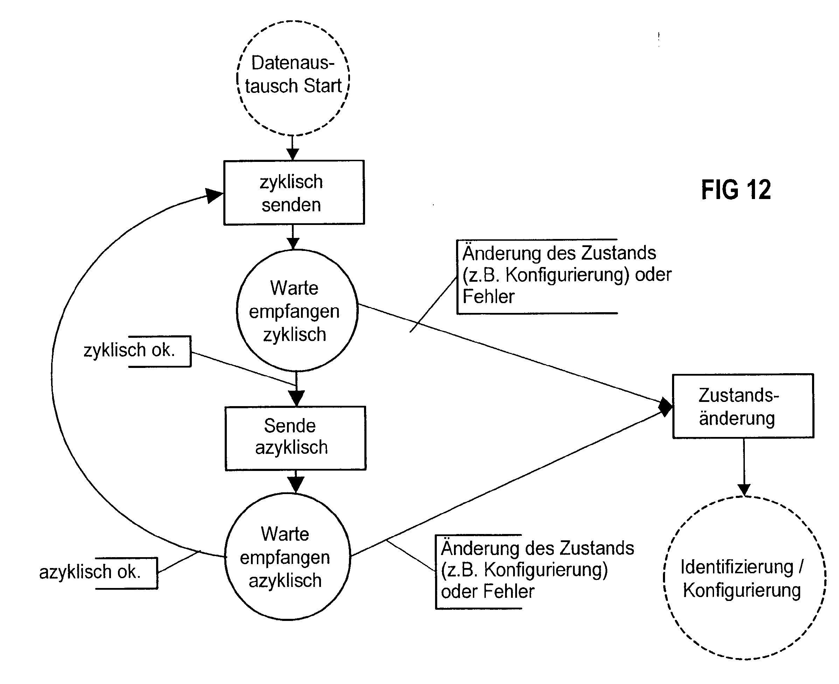

Die FIG 12 veranschaulicht in einem Zustandsdiagramm die Datenaustauschphase aus Sicht des Masters und des Slaves 4 bzw. 6 bzw. 8. Der zyklische Kanal ist sehr konstant. Dort werden Prozessdaten mit einer bekannten Bedeutung übertragen. Der azyklische Kanal ist dagegen nicht konstant, so dass dieser im folgenden genauer betrachtet werden soll.

Der azyklische Kanal basiert auf dem Client/Server-Prinzip, wobei ein von zwei Kommunikationspartnern eine Anforderung aussendet, welche der andere Kommunikationspartner dann erwidern. Anforderungen können prinzipiell beide Kommunikationspartner aussenden, jedoch das aktuelle Verfahren gestattet nur Anforderungen vom zweiten Kommunikationspartner 4 bzw. 6 bzw. 8 zum ersten Kommunikationspartner 2.

Folgende Funktionen werden durch diesen Kommunikationsmechanismus ausgeführt:
- Parameter-Anforderung:
   Der Client 2 sendet eine Parameter-Anforderung und der Server 4 bzw. 6 bzw. 8 antwortet mit einer Benutzer-Rückmeldung. Die Parameter-Anforderung/-Rückmeldung kann länger als ein azyklischer Kanal sein. Wenn dies der Fall ist, muss eine Domänenbehandlung durchgeführt werden.
- Alarm-Anforderung:
   Der Client 2 sendet eine Alarm-Anforderung und der Server 4 bzw. 6 bzw. 8 antwortet wie bei einer Parameter-Anforderung mit einer Benutzer-Rückmeldung. Die Länge einer Alarm-Anforderung/-Rückmeldung ist fest und immer in einem azyklischen Kanal unterzubringen. Eine Alarm-Anforderung unterbricht eine Domänenübertragung.
- Diagnose-Anforderung:
   Der Client 2 sendet eine Diagnose-Anforderung und der Server 4 bzw. 6 bzw. 8 antwortet mit einer Rückmeldung.
   Eine Diagnose-Anforderung wird nicht vom Benutzer beantwortet. Die Länge von Diagnosedaten sind fest vorgegeben und können immer in einem azyklischen Kanal untergebracht werden.

Allgemein wird immer nur eine Anforderung übertragen. Wenn eine Domänenübertragung aktiv ist, wird diese nur durch eine Alarm-Anforderung unterbrochen. Daten werden nur dann gesendet, wenn eine neue Anforderung/Rückmeldung vorliegt. Sonst werden nur Leertelegramme gesendet.

Als Domänenbehandlung wird ein Kommunikationsmechanismus bezeichnet, bei dem Daten mittels mehrere Telegramme übermittelt werden. Dieser Vorgang bleibt dem Benutzer verborgen. Dieser Kommunikationsmechanismus wird nur für Parameterdaten verwendet. Alle anderen Daten werden in einem Telegramm untergebracht.

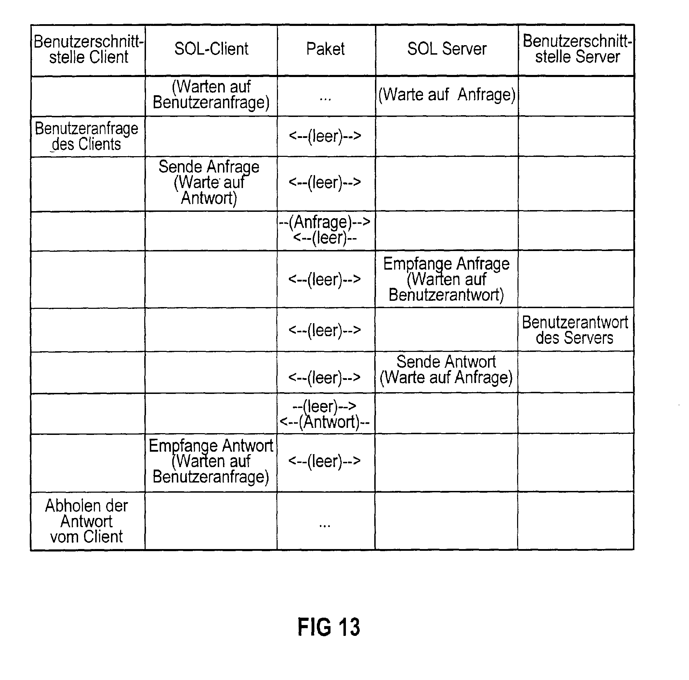

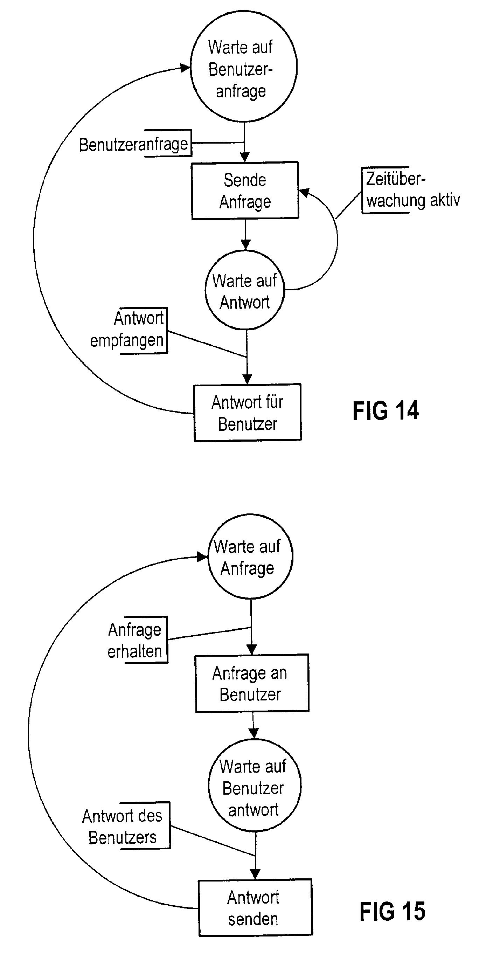

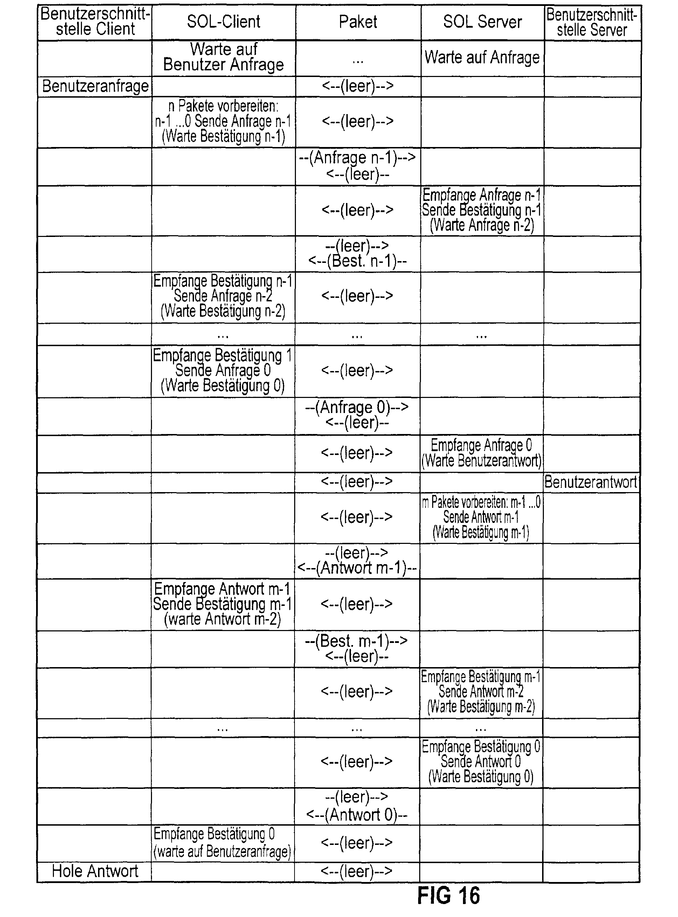

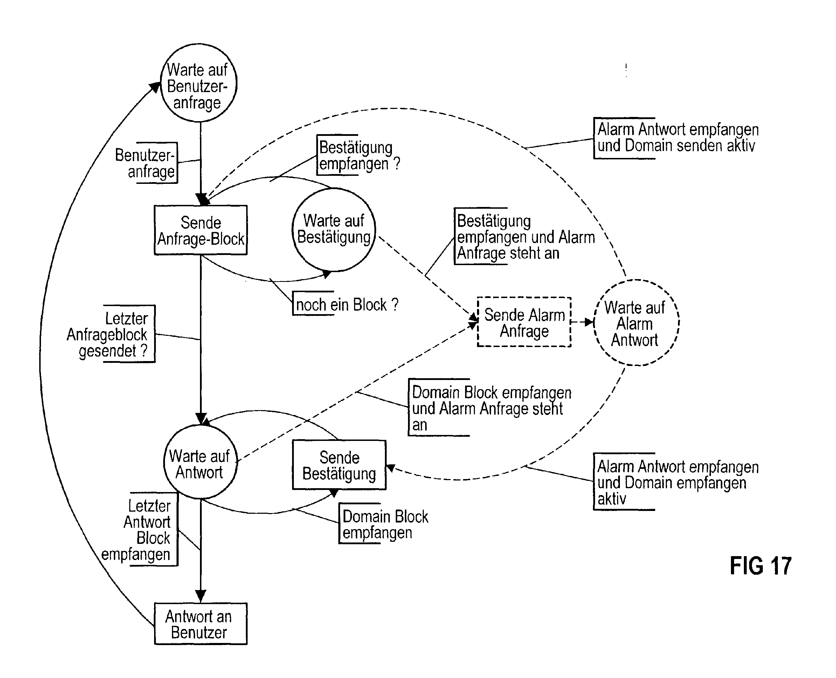

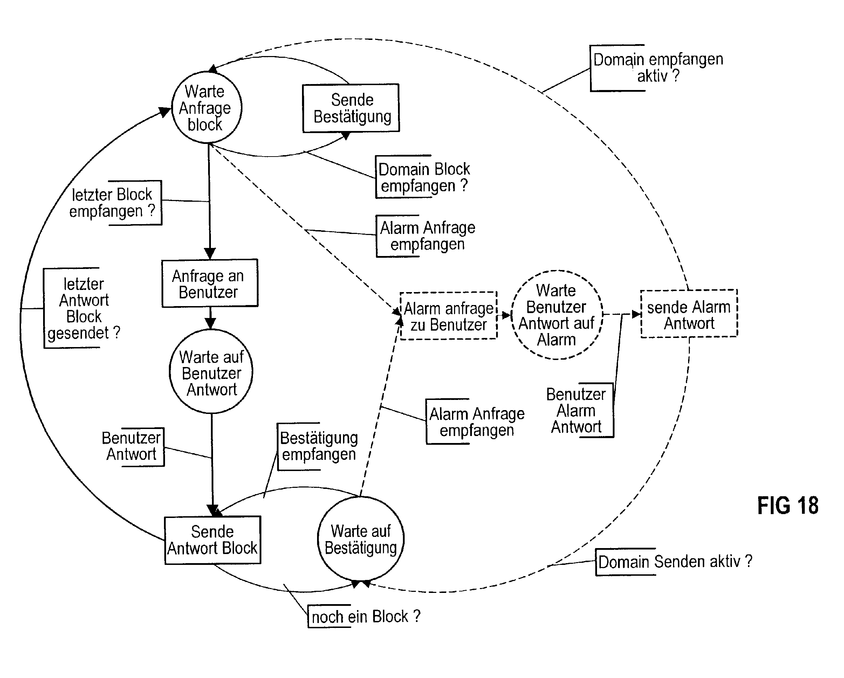

Die FIG 13 zeigt in einer Tabelle die Übertragungsfolge der Telegramme eines azyklischen Datenaustausches ohne eine Domänenbehandlung. In den FIG 14 und 15 sind die zugehörigen Zustandsdiagramme aus der Sicht des Client 2 und des Server 4 bzw. 6 bzw. 8 näher dargestellt. Zum Vergleich zeigt die FIG 16 eine Tabelle der Übertragungsfolge der Telegramme eines azyklischen Datenaustausches mit einer Domänenbehandlung. Die entsprechenden Zustandsdiagramme aus der Sicht des Client 2 und des Server 4 bzw. 6 bzw. 8 sind in den FIG 17 und 18 näher dargestellt. In diesen beiden FIG 17 und 18 zeigen die fettgedruckten Linien den normalen Ablauf (keine Domäne) und die unterbrochenen Linien einen Alarm, der die Domänenbehandlung unterbricht.

Wenn gemäß dem Zustandsdiagramm nach FIG 17 der Benutzer eine Anforderung initialisiert, wird diese gesendet. Danach wartet der Benutzer auf eine Rückmeldung. Wenn nicht innerhalb einer vorbestimmten Zeit keine Rückmeldung eintrifft, wird die Anforderung wiederholt. Eine eintreffende Rückmeldung wird dem Benutzer weitergeleitet. Ausnahme: Eine Diagnose-Rückmeldung wird nicht an den Benutzer weitergeleitet.

Wenn die Daten eine Domänenanforderung beinhalten, wird die vollständige Domäne gesendet. Jeder einzelne Teil der Domäne wird getrennt vom Empfänger bestätigt. Wenn die vollständige Domänenanforderung ohne Fehler gesendet ist, wird die Rückmeldung erwartet. Diese Rückmeldung wird dann vom Empfänger gesendet. Wenn diese Rückmeldung ebenfalls eine Domäne enthält, so wird jeder einzelne Teil der Domäne bestätigt. Sobald die vollständige Rückmeldung empfangen ist, wird die verarbeitet und der Verfahrensablauf startet wieder vom Anfang. Im Fall einer Zeitüberschreitung oder eines Domänenfehlers wird die Anforderung wiederholt.

Gemäß FIG 18 wird eine Rückmeldung nach Verarbeitung durch den Benutzer gesendet, wenn der Verarbeitungskanal frei ist und die empfangenen Daten gültig sind. Wenn die Daten eine Domänenanforderung enthalten, wird die vollständige Domäne empfangen. Jeder Teil der Domäne wird einzeln bestätigt. Sobald die vollständige Domäne empfangen und gültig ist, wird diese verarbeitet.

Mit diesen erfindungsgemäßen Kommunikations-Mechanismen erhält man eine schnelle periodische Kommunikation zwischen zwei Kommunikationspartnern 2 und 4 bzw. 6 bzw. 8, insbesondere zwischen einem Prozessor eines Antriebssystems und einem Prozessor eines Moduls, die mittels einer Voll-Duplex Punkt-zu-Punkt-Verbindung 10 miteinander verknüpft sind, wobei die seriellen Schnittstellen der Prozessoren verwendet werden. Da nun die seriellen Schnittstellen zweier Prozessoren verwendet werden, werden keine Dual-Port-RAM mehr benötigt, so dass dieses erfindungsgemäße Verfahren gerade bei Low-Perfomance-Antriebssystemen wegen eines erheblichen Kostenvorteils vorteilhaft ist. Außerdem zerstört oder beeinflusst die azyklische Datenübertragung nicht den zyklischen Datenaustausch. Ferner ist die Bandbreite der Übertragung in Abhängigkeit der Funktionalität und des Leistungsvermögens der Kommunikationspartner skalierbar.

## Patentansprüche

1. Kommunikationsverfahren für zwei Kommunikationspartner (2;4,6,8), die mittels einer Voll-Duplex Punkt-zu-Punkt-Verbindung (10) miteinander verknüpft sind, wobei dieses Kommunikationsverfahren in eine Identifizierungs-, eine Konfigurierungs- und eine Datenaustausch-Phase unterteilt ist, wobei während der Identifizierungsphase die Kommunikationspartner (2;4,6,8) sich gegenseitig identifizieren und ihre Kommunikationsparameter definieren, wobei während der Konfigurierungsphase kommunikationspartnerabhängige Konfigurierungsdaten zwischen den beiden Kommunikationspartnern (2;4,6,8) ausgetauscht werden, und wobei während der Datenaustauschphase zyklische und azyklische Daten zwischen den beiden Kommunikationspartnern ausgetauscht werden, wenn die Konfigurierungsphase erfolgreich abgeschlossen ist.

2. Kommunikationsverfahren nach Anspruch 1, **dadurch gekennzeichnet, dass** der Identifizierungsphase eine Initialisierungsphase vorgeschaltet ist, während der der zweite Kommunikationspartner (4,6,8) vom ersten Kommunikationspartner (2) erkannt wird.

3. Kommunikationsverfahren nach Anspruch 1 oder 2, **dadurch gekennzeichnet, dass** die Identifizierungs- und die Konfigurierungsphase jeweils ein zweifacher Quittungsbetrieb ist.

4. Kommunikationsverfahren nach einem der vorgenannten Ansprüche 1 bis 3, **dadurch gekennzeichnet, dass** die Konfigurierungsphase jederzeit neu beginnen kann.

5. Kommunikationsverfahren nach einem Ansprüche 1 bis 4, **dadurch gekennzeichnet, dass** die Konfigurierungsphase übergangen werden kann.

6. Kommunikationsverfahren nach einem der Ansprüche 1 bis 5, **dadurch gekennzeichnet, dass** eine fehlende Verbindung während der Kommunikation durch einen Neustart der Identifizierungsphase wiederhergestellt wird.

7. Kommunikationsverfahren nach einem der Ansprüche 1 bis 6, **dadurch gekennzeichnet, dass** die Datenaustausch-phase mindestens ein Kanal aufweist.

8. Kommunikationsverfahren nach einem der vorgenannten Ansprüche 1 bis 7, **dadurch gekennzeichnet, dass** ein erster Kommunikationspartner (2) ein Umrichter und ein zweiter Kommunikationspartner (4,6,8) ein Optionsmodul ist.

9. Kommunikationsverfahren nach Anspruch 8, **dadurch gekennzeichnet, dass** das Optionsmodul ein Automatisierungsmodul ist.

10. Kommunikationsverfahren nach Anspruch 8, **dadurch gekennzeichnet, dass** das Optionsmodul ein Technologiemodul ist.

11. Kommunikationsverfahren nach Anspruch 2, **dadurch gekennzeichnet, dass** zur Identifizierung des zweiten Kommunikationspartners (4,6,8) ein Spannungspotential auf einer Verbindungsleitung der Voll-Duplex Punkt-zu-Punkt-Verbindung (10) ausgewertet wird.
